# EUROPÄISCHE PATENTSCHRIFT

(11) **EP 2 222 976 B1**
(45) Veröffentlichungstag und Bekanntmachung des Hinweises auf die Patenterteilung: **30.05.2012**
(21) Anmeldenummer: 08849184.0
(22) Anmeldetag: 12.11.2008
(51) Int. Cl.: F16D 55/226

(54) **SCHEIBENBREMSE MIT MECHANISCHER SELBSTVERSTÄRKUNG**
DISC BRAKE WITH MECHANICAL SELF-ENERGIZATION
FREIN À DISQUE À AUTO-AMPLIFICATION MÉCANIQUE

(30) Priorität: 16.11.2007 DE 102007054807
(43) Veröffentlichungstag der Anmeldung: 01.09.2010
(73) Patentinhaber: Robert Bosch GmbH, 70442 Stuttgart (DE)
(72) Erfinder: BAUMANN, Dietmar, 71282 Hemmingen (DE)
(86) Internationale Anmeldenummer: PCT/EP2008/065409
(87) Internationale Veröffentlichungsnummer: WO 2009/062970

(56) Entgegenhaltungen:
- DE-A1- 10 307 224
- DE-A1-102006 001 621
- DE-B- 1 157 445
- DE-U1- 20 007 499
- DE-U1- 29 901 831

## Beschreibung

### Stand der Technik

Die Erfindung betrifft eine Scheibenbremse mit mechanischer Selbstverstärkung mit den Merkmalen des Oberbegriffs des Anspruchs 1.

Derartige Scheibenbremsen für Fahrzeuge, insbesondere Kraftfahrzeuge, sind bekannt. Beispielhaft wird auf die WO 02/40 887 A1 verwiesen. Die bekannte Scheibenbremse weist einen Bremssattel auf, in dem auf beiden Seiten einer Bremsscheibe je ein Reibbremsbelag angeordnet ist. Zu einer Bremsbetätigung ist einer der beiden Reibbremsbeläge mit einer Betätigungseinrichtung gegen die eine Seite der Bremsscheibe drückbar. Die Betätigungseinrichtung wird auch als Aktuator bezeichnet, der von ihr beaufschlagte Reibbremsbelag wird nachfolgend auch als aktuierter Reibbremsbelag bezeichnet.

Die bekannte Scheibenbremse weist eine mechanische Selbstverstärkungseinrichtung mit einem Keilmechanismus auf. Der Reibbremsbelag ist in Umfangs-und Drehrichtung der Bremsscheibe bzw. in einem Winkel schräg zu ihr verschiebbar, er stützt sich mit einem Keil auf seiner der Bremsscheibe abgewandten Rückseite bzw. an einem schräg zur Bremsscheibe verlaufenden Widerlager im Bremssattel in einem Keilwinkel schräg zur Bremsscheibe ab. Wird der Reibbremsbelag zur Bremsbetätigung gegen die Bremsscheibe gedrückt, übt die drehende Bremsscheibe eine Reibungskraft in ihrer Drehrichtung auf den Reibbremsbelag aus. Die Reibungskraft beaufschlagt den Reibbremsbelag in einen enger werdenden Keilspalt zwischen dem Widerlager des Bremssattels und der Bremsscheibe. Nach dem sog. Keilprinzip bewirkt die Abstützung am Widerlager eine Abstützkraft senkrecht zum Widerlager. Die Abstützkraft weist eine Kraftkomponente senkrecht zur Bremsscheibe auf, die den Reibbremsbelag zusätzlich zu einer von der Betätigungseinrichtung ausgeübten Betätigungskraft gegen die Bremsscheibe drückt und dadurch eine Spannkraft, mit der der Reibbremsbelag insgesamt gegen die Bremsscheibe gedrückt wird, erhöht. Die Scheibenbremse weist somit eine Selbstverstärkung auf.

Anstatt kraftverstärkend wie vorstehend anhand der WO 02/40 887 A1 erläutert, kann die Selbstverstärkungseinrichtung auch wegverstärkend wirken, so dass ein Spannweg zum Zuspannen, d. h. zur Betätigung der Scheibenbremse zum Teil von der Selbstverstärkungseinrichtung bewirkt wird und nur der übrige Zuspannweg von der Betätigungseinrichtung ausgeführt werden muss. Allgemein wandelt die Selbstverstärkungseinrichtung eine von der drehenden Bremsscheibe auf den bei betätigter Scheibenbremse gegen sie gedrückten Reibbremsbelag ausgeübte Reibungskraft in eine Hilfsenergie zur Bremsbetätigung.

Genügt die Selbstverstärkung bei einer Drehrichtung der Bremsscheibe, ist ein Keilmechanismus mit einer Keilschräge in einer Umfangsrichtung der Bremsscheibe ausreichend. Allgemein genügt zur Selbstverstärkung für eine Drehrichtung der Bremsscheibe eine Selbstverstärkungseinrichtung, die nur in dieser einen Drehrichtung wirksam ist. Damit die Selbstverstärkung für beide Drehrichtungen der Bremsscheibe wirksam ist, weist der Keilmechanismus der bekannten Scheibenbremse Keile bzw. Widerlager im Bremssattel auf, die entgegengesetzt schräg zur Bremsscheibe verlaufen. Der Reibbremsbelag verschiebt sich immer entlang der Keilschräge, die schräg in Drehrichtung auf die Bremsscheibe zu verläuft. Die Keilwinkel können für beide Drehrichtungen der Bremsscheibe gleich oder unterschiedlich sein, in letzterem Fall ist die Höhe der Selbstverstärkung verschieden.

Es sind auch sog. Rampenmechanismen bekannt und für die Erfindung verwendbar im Unterschied zu einem Keilmechanismus mit einem über die gesamte Länge des Keils oder des Widerlagers konstantem Keilwinkel weist ein Rampenmechanismus einen sich im Verlauf einer Rampe ändernden Rampenwinkel, also eine sich ändernde Steigung auf. Durch einen zunächst steilen Rampenwinkel wird eine schnelle Zustellung des Reibbremsbelags zur Bremsscheibe erzielt, wodurch sich ein Lüftspiel, also ein Spalt zwischen der Bremsscheibe und dem Reibbremsbelag bei nicht betätigter Bremse, schnell überwinden lässt. Durch einen bei zunehmender Verschiebung des Reibbremsbelags mit zunehmender Spannkraft spitzer werdenden Rampenwinkel erhöht sich die Selbstverstärkung bei hoher Spannkraft. Auch ein Rampenmechanismus mit sich über den Verlauf einer Rampe änderndem Rampenwinkel soll als Keilmechanismus im Sinne der Erfindung verstanden werden.

Die Patentschrift DE 1 157 445 B offenbart eine Duo-Servo-Teilbelagscheibenbremse mit einem Schwimmsattel und mit einer hydraulischen Kolben-Zylinder-Einheit zur Bremsbetätigung. Im Schwimmsattel ist ein schwimmender Rahmen angeordnet, in welchem ein Reibbremsbelag auf einer Seite einer Bremsscheibe fest angeordnet ist und in welchem auf einer gegenüberliegenden Seite der Bremsscheibe ein zweiter Reibbremsbelag in Umfangsrichtung der Bremsscheibe beweglich angeordnet ist. Der schwimmende Rahmen stützt sich über Schrägfläche und Wälzkörper am Schwimmsattel ab, der bewegliche Reibbremsbelag stützt sich über Schrägflächen und Wälzkörper am schwimmenden Rahmen ab. Die Schrägflächen und die Wälzkörper bilden Selbstverstärkungseinrichtungen. Bei einer Bremsbetätigung verschiebt der Kolben im Schwimmsattel den schwimmenden Rahmen quer zur Bremsscheibe und drückt dadurch den festen Reibbremsbelag gegen die eine Seite der Bremsscheibe. Der Schwimmsattel bewegt sich entgegengesetzt zum schwimmenden Rahmen quer zu Bremsscheibe und drückt über einen Anschlag den anderen Reibbremsbelag gegen die andere Seite der Bremsscheibe. Die drehende Bremsscheibe verschiebt über den festen Reibbremsbelag den schwimmenden Rahmen in Drehrichtung, wodurch die eine Selbstverstärkungseinrichtung aktiviert wird, und die drehende Bremsscheibe verschiebt den beweglichen Reibbremsbelag in Drehrichtung, wodurch die andere, zwischen dem anderen Reibbremsbelag und dem schwimmenden Rahmen angeordnete Selbstverstärkungseinrichtung aktiviert wird.

Die Offenlegungsschrift DE 103 07 224 A1 offenbart eine Scheibenbremse mit einer mechanischen Selbstverstärkungseinrichtung. Eine Bremsbetätigung erfolgt über ein Keilgetriebe, dessen Keil von einer Feder verschoben wird und dadurch einen Reibbremsbelag gegen eine Bremsscheibe drückt. Ein Lösen der Scheibenbremse erfolgt mit einem Aktuator, der den Keil des Keilgetriebes gegen die Kraft des Federelements in Löserichtung verschiebt.

Es sind auch andere mechanische Selbstverstärkungseinrichtungen bekannt und im Rahmen der Erfindung möglich. Beispielsweise ist eine Selbstverstärkung mit einem oder mehreren zueinander parallelen Stützhebeln möglich, die den Reibbremsbelag schräg unter einem Stützwinkel zur Bremsscheibe abstützen. Es handelt sich um ein mechanisches Analogon zu einem Keilmechanismus.

### Offenbarung der Erfindung

Die erfindungsgemäße Scheibenbremse mit den Merkmalen des Anspruchs 1 weist für jeden Reibbremsbelag eine mechanische Selbstverstärkungseinrichtung, also zwei Selbstverstärkungseinrichtungen auf. Das schließt eventuelle weitere Reibbremsbeläge mit oder ohne Selbstverstärkungseinrichtungen nicht aus. Die Selbstverstärkung der erfindungsgemäßen Scheibenbremse ist durch die zweite Selbstverstärkungseinrichtung erhöht, die erforderliche Betätigungsenergie der Betätigungseinrichtung ist entsprechend verringert. Dadurch verringert sich die Leistungsaufnahme der Betätigungseinrichtung, bei einer elektrisch betätigten Betätigungseinrichtung wird ein elektrisches Bordnetz eines Kraftfahrzeugs entsprechend weniger belastet. Auch kann die Betätigungseinrichtung auf Grund der geringeren Energie- und Leistungsanforderung kleiner und leichter dimensioniert sein. Das ist ein besonderer Vorteil bei einer an einem Fahrzeugrad angeordneten Radbremse wegen des dort üblicherweise engen und begrenzten Bauraums und weil die Radbremse eine ungefederte Masse ist.

Mindestens eine Selbstverstärkungseinrichtung ist wegverstärkend, sie weist Rückstellfedern auf, die den Reibbremsbelag gegen eine Verschiebung in Drehrichtung der Bremsscheibe abstützen. Bei betätigter Scheibenbremse bewegt die drehende Bremsscheibe den gegen sie gedrückten Reibbremsbelag so weit in Drehrichtung, bis eine von der drehenden Bremsscheibe auf den gegen sie gedrückten Reibbremsbelag ausgeübte Reibungskraft im Gleichgewicht mit einer entgegengerichteten Federkraft der Rückstellfeder ist. Die Verschiebung des Reibbremsbelags in Drehrichtung der Bremsscheibe bewirkt eine Zustellung des Reibbremsbelags quer zur Bremsscheibe, welche einen Betätigungsweg verkürzt, den die Betätigungseinrichtung zur Bremsbetätigung ausführen muss.

Die Betätigung kann an sich beliebig, also beispielsweise hydraulisch, pneumatisch, mechanisch, elektromechanisch, elektromagnetisch oder mit einem Piezoelement erfolgen. Auf Grund der hohen Selbstverstärkung und des bei wegverstärkender Selbstverstärkungseinrichtung kurzen Betätigungswegs eignet sich die erfindungsgemäße Scheibenbremse auch für beispielsweise eine elektromagnetische Betätigung oder eine Betätigung mit einem Piezoelement, deren Einsatz in bekannten selbstverstärkenden Scheibenbremsen zumindest problematisch ist.

Die Unteransprüche haben vorteilhafte Ausgestaltungen und Weiterbildungen der im Anspruch 1 angegebenen Erfindung zum Gegenstand.

### Kurze Beschreibung der Zeichnung

Die Erfindung wird nachfolgend anhand in der Zeichnung dargestellter Ausführungsformen näher erläutert. Es zeigen:
- Figur 1: eine erste Ausführungsform einer erfindungsgemäßen Scheibenbremse mit Blickrichtung radial von außen auf eine Bremsscheibe; und
- Figur 2: eine zweite Ausführungsform der Erfindung, ebenfalls mit Blickrichtung radial von außen auf eine Bremsscheibe.

Die Zeichnungen sind als schematisierte und teilweise vereinfachte Darstellungen zur Erläuterung und zum Verständnis der Erfindung zu verstehen.

### Ausführungsformen der Erfindung

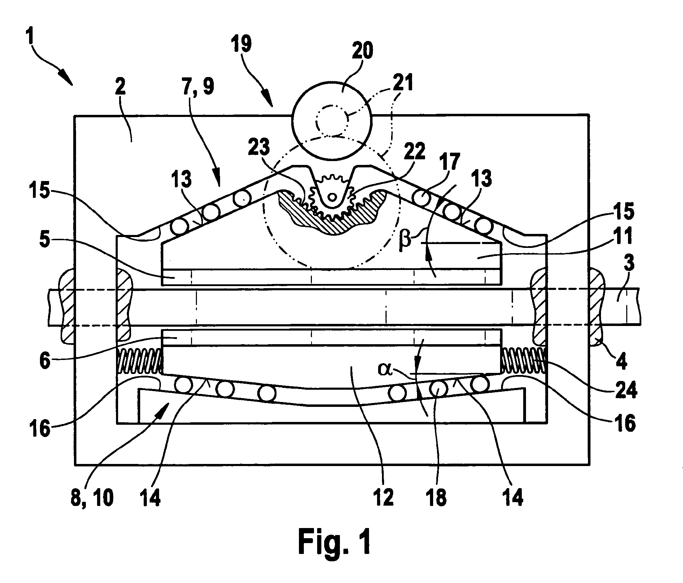

Die in Figur 1 dargestellte erfindungsgemäße Scheibenbremse 1 weist einen Schwimmsattel als Bremssattel 2 auf, der quer zu einer Bremsscheibe 3 verschiebbar geführt ist. Schiebeführungen 4 sind in der Zeichnung symbolisch dargestellt. Anstelle des Bremssattels 2 kann auch die Bremsscheibe 3 schwimmend, d. h. axial verschieblich gelagert sein. Auf jeder Seite der Bremsscheibe 3 ist ein Reibbremsbelag 5, 6 im Bremssattel 2 angeordnet.

Die Scheibenbremse 1 weist für jeden Reibbremsbelag 5, 6 eine mechanische Selbstverstärkungseinrichtung 7, 8 mit einem Keilmechanismus 9, 10 auf. Jeder der beiden Reibbremsbeläge 5, 6 weist auf einer der Bremsscheibe 3 abgewandten Rückseite einen Keilkörper 11, 12 mit Keilflächen 13, 14 auf, mit denen sich die Keilkörper 11, 12 an komplementären Widerlagern 15, 16 des Bremssattels 2 abstützen. Die Widerlager 15, 16 verlaufen im gleichen Winkel schräg zur Bremsscheibe 3 wie die zugeordneten Keilflächen 13, 14 der Keilkörper 11, 12. Dieser Winkel wird als Keilwinkel α, β bezeichnet. Die Keilflächen 13, 14 und die Widerlager 15, 16 verlaufen im Keilwinkel α, β schräg und in Umfangsrichtung zur Bremsscheibe 3, sie bilden vorzugsweise zur Bremsscheibe 3 gleichachsige Schraubenbahnen mit einer den Keilwinkeln α, β entsprechenden Steigung. Möglich ist auch eine abweichende Richtung der Keilflächen 13, 14 und der Widerlager 15, 16, beispielsweise in einer Sehnenrichtung und in den Keilwinkeln α, β zur Bremsscheibe 3. Die Reibbremsbeläge 5, 6 sind mit ihren Keilkörpern 11, 12 entlang der Widerlager 15, 16, also in Umfangsrichtung zur Bremsscheibe 3 und in den Keilwinkeln α, β schräg zur Bremsscheibe 3 verschiebbar.

Bei der dargestellten Ausführungsform der Erfindung weisen beide Keilkörper 11, 12 entgegengesetzt schräg zur Bremsscheibe 3 verlaufende Keilflächen 13, 14 und der Bremssattels 2 entsprechende Widerlager 15, 16 für beide Drehrichtungen der Bremsscheibe 3 auf. Die Keilwinkel α, β können für die beiden Drehrichtungen der Bremsscheibe 3 gleich oder verschieden groß sein, letzteres um unterschiedlich hohe Selbstverstärkungen für die beiden Drehrichtungen der Bremsscheibe 3 zu erreichen. Zur Reibungsminderung sind die Keilkörper 11, 12 mit Rollen als Wälzkörper 17, 18 wälzgelagert. Die Wälzkörper 17, 18 sind zwischen den Keilflächen 13, 14 und den Widerlagern 15, 16 angeordnet.

Zur Bremsbetätigung weist die Scheibenbremse 1 eine elektromechanische Betätigungseinrichtung 19 mit einem Elektromotor 20 und einem Zahnrad-Untersetzungsgetriebe 21 auf. Zahnräder des Zahnradgetriebes 21 befinden sich oberhalb einer Zeichenebene und sind deswegen mit Strich-2-Punkt-Linien dargestellt. Über das Zahnradgetriebe 21 treibt der Elektromotor 20 ein drehbar am Bremssattel 2 gelagertes Zahnrad 22 an, das mit einer Zahnstange 23 eines der beiden Keilkörper 11 kämmt. Die Zahnstange 23 verläuft in der Verschieberichtung des Reibbremsbelags 5, also parallel zu den Keilflächen 13 und den Widerlagern 15. Wegen der entgegengesetzten Steigungen der Keilflächen 13 und der Widerlager 15 ist die Zahnstange 23 in ihrer Mitte abgewinkelt oder gekrümmt.

Zur Betätigung der Scheibenbremse 1 wird der Elektromotor 20 stets so bestromt, dass sich der Reibbremsbelag 5 in Drehrichtung der Bremsscheibe 3 verschiebt. Der Reibbremsbelag 5 verschiebt sich entlang des Widerlagers 15 schräg auf die Bremsscheibe 3 zu, bis er an der Bremsscheibe 3 anliegt. Der Reibbremsbelag 5, dessen Keilkörper 11 mit der elektromechanischen Betätigungseinrichtung 19 verschoben wird, wird nachfolgend auch als aktuierter Reibbremsbelag 5 bezeichnet. Der andere Reibbremsbelag 6, der auf der gegenüber liegenden Seite der Bremsscheibe 3 angeordnet ist, wird nachfolgend auch als nicht-aktuierter Reibbremsbelag 6 bezeichnet werden. Beim weiteren Verschieben des aktuierten Reibbremsbelags 5 wird der Bremssattel 2 quer zur Bremsscheibe 3 verschoben, bis auch der nicht-aktuierte Reibbremsbelag 6 an der Bremsscheibe 3 anliegt. Die drehende Bremsscheibe 3 beaufschlagt die beiden Reibbremsbeläge 5, 6 in enger werdende Keilspalte zwischen den Widerlagern 15, 16 und der Bremsscheibe 3. Auf Grund der Abstützung an den schräg unter den Keilwinkeln α, β zur Bremsscheibe 3 verlaufenden Widerlagern 15, 16 stützen die Widerlager 15, 16 die Reibbremsbeläge 5, 6 mit einer Abstützkraft ab, die eine Komponente senkrecht zur Bremsscheibe 3 aufweist und die Reibbremsbeläge 5, 6 zusätzlich zur Betätigungseinrichtung 19 gegen die Bremsscheibe 3 drückt. Die Scheibenbremse 1 weist eine Selbstverstärkung auf.

In Figur 1 ist die Selbstverstärkungseinrichtung 8 des nicht-aktuierten Reibbremsbelags 6 wegverstärkend ausgebildet. Sie weist Rückstellfedern 24 auf, die den Keilkörper 12 am Bremssattel 2 gegen eine Verschiebung in Drehrichtung der Bremsscheibe 3 abstützen. Der nicht-aktuierte Reibbremsbelag 6 verschiebt sich so weit in Drehrichtung der Bremsscheibe 3, bis sich die von der drehenden Bremsscheibe 3 auf den Reibbremsbelag 6 ausgeübte Reibungskraft und die entgegen gerichtete Federkraft der Rückstellfeder 24 das Gleichgewicht halten. Die wegverstärkende Selbstverstärkungseinrichtung 8 des nicht-aktuierten Reibbremsbelags 6 mit dem Keilmechanismus 10 bewirkt durch die Verschiebung des Reibbremsbelags 6 entlang des schräg zur Bremsscheibe 3 verlaufenden Widerlagers 16 den Weg des Reibbremsbelags 6 quer zur Bremsscheibe 3, der eine elastische Aufweitung des Bremssattels 2 und eine Elastizität der Reibbremsbeläge 5, 6 ausgleicht. Dem entsprechend verkürzt sich ein Betätigungsweg, den die elektromechanische Betätigungseinrichtung 19 zur Bremsbetätigung und zum Erreichen einer bestimmten Bremskraft ausführen muss. Auf Grund der den Verschiebeweg des Reibbremsbelags 6 begrenzenden Rückstellfeder 24 tritt auch bei einem spitzen Keilwinkel α keine Selbsthemmung auf. Der Keilwinkel α kann deswegen spitz gewählt werden, und zwar so, dass der Tangens des Keilwinkels α kleiner als ein Reibwert µ zwischen dem Reibbremsbelag 6 und der Bremsscheibe 3 ist.

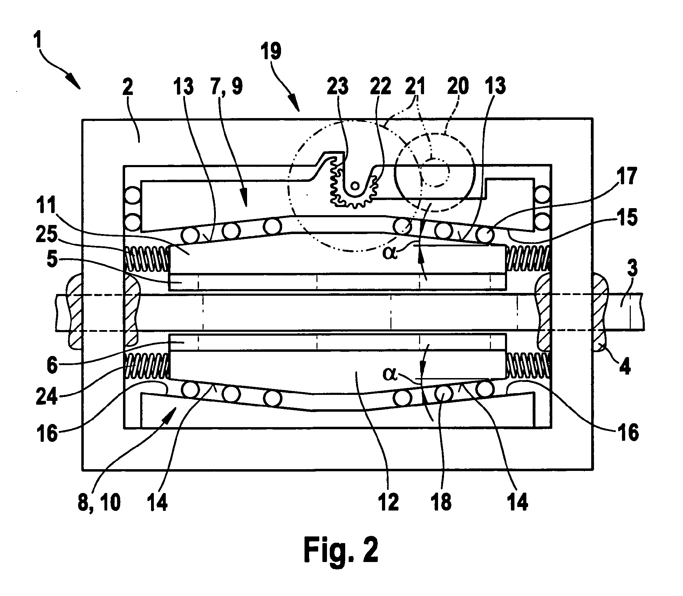

Die Selbstverstärkungseinrichtung 7 des aktuierten Reibbremsbelags 5 ist kraftverstärkend, der Tangens des Keilwinkels β ist größer als der Reibwert µ zwischen dem Reibbremsbelag 5 und der Bremsscheibe 3, so dass die Selbstverstärkungseinrichtung 7 des aktuierten Reibbremsbelags 5 nicht selbsthemmend ist. Allerdings ist auch eine selbsthemmende Auslegung der Selbstverstärkungseinrichtung 7 des aktuierten Reibbremsbelags 5 möglich. In diesem Fall ist der Tangens des Keilwinkels β kleiner als der Reibwert µ. Der aktuierte Reibbremsbelag 5 muss bei selbsthemmender Auslegung der Selbstverstärkungseinrichtung 7 von der elektromechanischen Betätigungseinrichtung 19 gegen eine Mitbewegung mit der drehenden Bremsscheibe 3 in den Kellspalt zwischen dem Widerlager 15 und der Bremsscheibe 3 rückgehalten werden. Bei einer wegverstärkenden Selbstverstärkungseinrichtung 7 wie in der noch zu erläuternden Figur 2 ist ein Rückhalten des aktuierten Reibbremsbelags 5 bei selbsthemmender Auslegung der Selbstverstärkungseinrichtung 7 nicht erforderlich.

Die kraftverstärkende Selbstverstärkungseinrichtung 7 des aktuierten Reibbremsbelags 5 mit dem Keilmechanismus 9 weist keine Rückstellfedern auf. Hier bestimmt sich die Spannkraft, mit der der Reibbremsbelag 5 gegen die Bremsscheibe 3 gedrückt wird, durch die von der Betätigungseinrichtung 19 ausgeübte Betätigungskraft und die von der drehenden Bremsscheibe 3 auf den gegen sie gedrückten Reibbremsbelag 5 ausgeübte Reibungskraft, die beide über die Abstützung des Keilkörpers 11 des Reibbremsbelags 5 am Widerlager 15 wirken. Die Spannkraft, mit der beide Reibbremsbeläge 5, 6 gegen die Bremsscheibe 3 gedrückt werden, ist auf beiden Seiten der Bremsscheibe 3 und für beide Reibbremsbeläge 5, 6 gleich groß. Sie bestimmt sich wie erläutert aus der Betätigungskraft der Betätigungseinrichtung 19 und der Selbstverstärkung der kraftverstärkenden Selbstverstärkungseinrichtung 7. Durch die Wegverstärkung und die Kraftverstärkung weist die Scheibenbremse 1 eine hohe Selbstverstärkung auf, trotzdem ist die Steuerung oder Regelung der Spannkraft und der Bremskraft gleich wie bei einer Scheibenbremse mit nur einer kraftverstärkenden Selbstverstärkungseinrichtung. Eine Selbsthemmung tritt dann nicht auf, wenn die kraftverstärkende Selbstverstärkungseinrichtung 7 nicht selbsthemmend ausgelegt ist durch Wahl eines entsprechend großen Keilwinkels β.

Im Unterschied zu Figur 1 ist bei der Scheibenbremse 1 aus Figur 2 nicht nur die Selbstverstärkungseinrichtung 8 des nicht-aktuierten Reibbremsbelags 6, sondern auch die Selbstverstärkungseinrichtung 7 des aktuierten Reibbremsbelags 5 wegverstärkend ausgebildet, sie weist Rückstellfedern 25 auf, die den Keilkörper 11 des aktuierten Reibbremsbelags 5 in Drehrichtung der Bremsscheibe 3 am Bremssattel 2 abstützen. Der Keilwinkel α beider Selbstverstärkungseinrichtungen 7, 8 ist in Figur 2 so spitz gewählt, dass der Tangens des Keilwinkels α kleiner als der Reibwert µ zwischen dem Reibbremsbelag 5 und der Bremsscheibe 3 ist.

Wie in Figur 1 weist die Betätigungseinrichtung 19 der Scheibenbremse 1 aus Figur 2 einen Elektromotor 20 und ein Untersetzungsgetriebe 21 auf, die ein am Bremssattel 2 gelagertes Zahnrad 22 drehend antreiben. Im Unterschied zu Figur 1 ist in Figur 2 das Widerlager 15 der Selbstverstärkungseinrichtung 7 des nicht-aktuierten Reibbremsbelags 5 quer zur Bremsscheibe 3 im Bremssattel 2 verschiebbar. Das Zahnrad 22 kämmt mit einer Zahnstange 23 des Widerlagers 15, die quer zur Bremsscheibe 3 verläuft, so dass durch Bestromung des Elektromotors 20 das Widerlager 15 und über dieses der aktuierte Reibbremsbelag 5 quer zur Bremsscheibe 3 verschoben wird. Die Verschiebung beider Reibbremsbeläge 5, 6 entlang der Widerlager 15, 16 erfolgt durch die Reibungskraft der drehenden Bremsscheibe 3.

Weil beide Selbstverstärkungseinrichtungen 7, 8 wegverstärkend sind, verkürzt sich der von der Betätigungseinrichtung 19 auszuführende Betätigungsweg, es erhöht sich jedoch nicht die Spannkraft, mit der die Reibbremsbeläge 5, 6 gegen die Bremsscheibe 3 gedrückt werden. Die Spannkraft entspricht der von der Betätigungseinrichtung 19 aufgebrachten Betätigungskraft senkrecht zur Bremsscheibe 3. Im gesamten Reibwertstreubereich ist die Steuerung oder Regelung der Spann- oder Bremskraft trotz der Selbstverstärkung so wie bei einer Scheibenbremse ohne Selbstverstärkung. Eine Steuerung oder Regelung der Spannkraft ist trotz der hohen Selbstverstärkung durch die beiden Selbstverstärkungseinrichtungen 7, 8 nicht erschwert im Vergleich mit einer Scheibenbremse ohne Selbstverstärkung. Ein weiterer Vorteil der Scheibenbremse 1 aus Figur 2 mit zwei wegverstärkenden Selbstverstärkungseinrichtungen 7, 8 ist die Vermeidung der Selbsthemmung auch bei spitzem Keilwinkel α. Ein weiterer Vorteil ist ein einfacher Verschleißausgleich, indem beim Lösen die Scheibenbremse 1 so weit geöffnet wird, dass sich unabhängig von der Abnutzung der Reibbremsbeläge 5, 6 ein gewünschtes Lüftspiel zwischen den Reibbremsbeläge 5, 6 und der Bremsscheibe 3 einstellt. Diese Verschleißnachstellung ist unabhängig von der Drehrichtung der Bremsscheibe 3, weil die Betätigungseinrichtung 19 senkrecht zur Bremsscheibe 3 und nicht parallel zur den Widerlagern 15 wirkt. Auch die Betätigung, also die Drehrichtung des Elektromotors 20 ist unabhängig von der Drehrichtung der Bremsscheibe 3.

Im Übrigen ist die in Figur 2 dargestellte Scheibenbremse 1 gleich ausgebildet und funktioniert in gleicher Weise wie die Scheibenbremse 1 aus Figur 1. Zur Vermeidung von Wiederholungen wird zur Erläuterung von Figur 2 insoweit auf die Erläuterungen der Figur 1 verwiesen. Gleiche Bauteile sind in beiden Figuren mit gleichen Bezugszahlen versehen.

## Patentansprüche

1. Scheibenbremse mit mechanischer Selbstverstärkung, mit einem Bremssattel (2), in dem zwei Reibbremsbeläge (5, 6) angeordnet sind, von denen sich jeder auf einer Seite einer Bremsscheibe (3) befindet, mit einer Betätigungseinrichtung (Aktuator) (19), mit der einer der beiden Reibbremsbeläge (5) (aktuierter Reibbremsbelag) gegen die Bremsscheibe (3) drückbar ist, und mit einer mechanischen Selbstverstärkungseinrichtung (7) für einen der beiden Reibbremsbeläge (5), die eine bei betätigter Scheibenbremse (1) von der drehenden Bremsscheibe (3) auf den gegen sie gedrückten Reibbremsbelag (5) ausgeübte Reibungskraft in eine Hilfsenergie zur Bremsbetätigung wandelt, und mit einer zweiten mechanischen Selbstverstärkungseinrichtung (8) für den anderen Reibbremsbelag (6), **dadurch gekennzeichnet, dass** mindestens eine Selbstverstärkungseinrichtung (8) wegverstärkend ist und Rückstellfedern (24, 25) aufweist, die den Reibbremsbelag (5, 6) gegen eine Verschiebung in Drehrichtung der Bremsscheibe (3) abstützen.

2. Scheibenbremse nach Anspruch 1, **dadurch gekennzeichnet, dass** mindestens eine der beiden Selbstverstärkungseinrichtungen (7, 8) einen Keilmechanismus (9, 10) aufweist.

3. Scheibenbremse nach Anspruch 1, **dadurch gekennzeichnet, dass** mindestens eine der Selbstverstärkungseinrichtungen (7) kraftverstärkend ist

4. Scheibenbremse nach Anspruch 1, **dadurch gekennzeichnet, dass** die Selbstverstärkungseinrichtung (8) des nicht-aktuierten Reibbremsbelags (6) wegverstärkend ist.

5. Scheibenbremse nach Anspruch 2, **dadurch gekennzeichnet, dass** der Tangens des Keilwinkels α des Keilmechanismus (10) kleiner als der Reibwert zwischen dem Reibbremsbelag (6) und der Bremsscheibe (3) ist.

6. Scheibenbremse nach Anspruch 1, **dadurch gekennzeichnet, dass** die Scheibenbremse (1) einen Schwimmsattel (2) aufweist und/oder die Bremsscheibe (3) schwimmend gelagert ist.

## Claims

1. Disc brake with mechanical self-boosting, having a brake caliper (2) in which are arranged two friction brake pads (5, 6), each of which is situated on one side of a brake disc (3), having an actuating device (actuator) (19) by means of which one of the two friction brake pads (5) (actuated friction brake pad) can be pressed against the brake disc (3), and having a mechanical self-boosting device (7) for one of the two friction brake pads (5), by means of which self-boosting device a friction force exerted by the rotating brake disc (3) on the friction brake pad (5) pressed against said brake disc when the disc brake (1) is actuated is converted into auxiliary energy for brake actuation, and having a second mechanical self-boosting device (8) for the other friction brake pad (6), **characterized in that** at least one self-boosting device (8) has a travel-boosting action and has restoring springs (24, 25) which support the friction brake pad (5, 6) against a displacement in the direction of rotation of the brake disc (3).

2. Disc brake according to Claim 1, **characterized in that** at least one of the two self-boosting devices (7, 8) has a wedge mechanism (9, 10).

3. Disc brake according to Claim 1, **characterized in that** at least one of the self-boosting devices (7) has a force-boosting action.

4. Disc brake according to Claim 1, **characterized in that** the self-boosting device (8) of the non-actuated friction brake pad (6) has a travel-boosting action.

5. Disc brake according to Claim 2, **characterized in that** the tangent of the wedge angle α of the wedge mechanism (10) is smaller than the friction value µ between the friction brake pad (6) and the brake disc (3).

6. Disc brake according to Claim 1, **characterized in that** the disc brake (1) has a floating caliper (2) and/or the brake disc (3) is mounted in a floating manner.

## Revendications

1. Frein à disque à auto-amplification mécanique, comprenant un étrier de frein (2) dans lequel sont disposées deux garnitures de frein à friction (5, 6), chacune de ces dernières se situant d'un côté d'un disque de frein (3), comprenant un dispositif d'actionnement (actionneur) (19) à l'aide duquel l'une des deux garnitures de frein à friction (5) (garniture de frein à friction actionnée) peut être pressée contre le disque de frein (3), et comprenant un dispositif d'auto-amplification mécanique (7) pour l'une des deux garnitures de frein à friction (5), lequel dispositif d'auto-amplification transforme en une énergie auxiliaire pour l'actionnement du frein une force de friction exercée par le disque de frein rotatif (3) sur la garniture de frein à friction (5) pressée contre celui-ci lorsque le frein à disque (1) est actionné, et comprenant un deuxième dispositif d'auto-amplification mécanique (8) pour l'autre garniture de frein à friction (6), **caractérisé en ce qu'**au moins un dispositif d'auto-amplification (8) amplifie la course et comprend des ressorts de rappel (24, 25) qui supportent la garniture de frein à friction (5, 6) à l'encontre d'un déplacement dans le sens de rotation du disque de frein (3).

2. Frein à disque selon la revendication 1, **caractérisé en ce qu'**au moins l'un des deux dispositifs d'auto-amplification (7, 8) comprend un mécanisme à coin (9, 10).

3. Frein à disque selon la revendication 1, **caractérisé en ce qu'**au moins l'un des dispositifs d'auto-amplification (7) amplifie la force.

4. Frein à disque selon la revendication 1, **caractérisé en ce que** le dispositif d'auto-amplification (8) de la garniture de frein à friction non actionnée (6) amplifie la course.

5. Frein à disque selon la revendication 2, **caractérisé en ce que** la tangente de l'angle de coin α du mécanisme à coin (10) est inférieure au coefficient de friction µ entre la garniture de frein à friction (6) et le disque de frein (3).

6. Frein à disque selon la revendication 1, **caractérisé en ce que** le frein à disque (1) comprend un étrier flottant (2) et/ou le disque de frein (3) est monté flottant.
